# EUROPEAN PATENT SPECIFICATION

(11) **EP 1 757 394 B1**
(45) Date of publication and mention of the grant of the patent: **11.08.2010**
(21) Application number: 05018398.7
(22) Date of filing: 24.08.2005
(51) Int. Cl.: B23D 47/02

(54) **Worktable with miter gauge**
Arbeitstisch mit Gehrungslehre
Table de travail avec equerre à onglet

(43) Date of publication of application: 28.02.2007
(73) Proprietor: Motomax Electric Co., Ltd., Taiping City, Taichung Hsien (TW)
(72) Inventor: Chang, Sung Yu, Tali City, Taichung Hsien Taiwan R.O.C. (TW)
(74) Representative: Viering, Hans-Martin

(56) References cited:
- US-A- 5 201 863
- US-A- 5 722 472
- US-A1- 2001 047 706

## Description

The present invention relates to a worktable with an adjustable and movable top and a tilt control device. A worktable according to the preamble section of claim 1 is disclosed in US 2001/047706 A1.

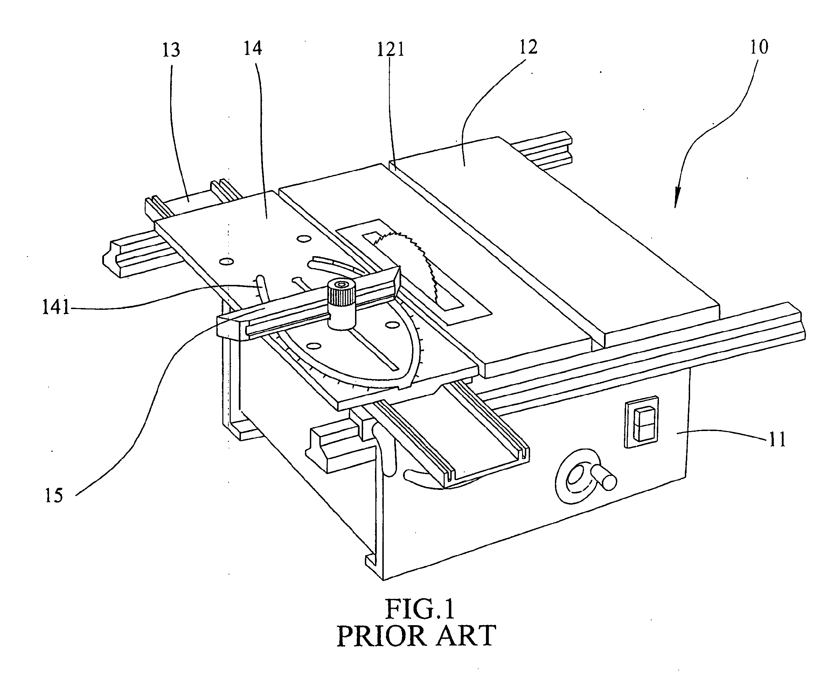

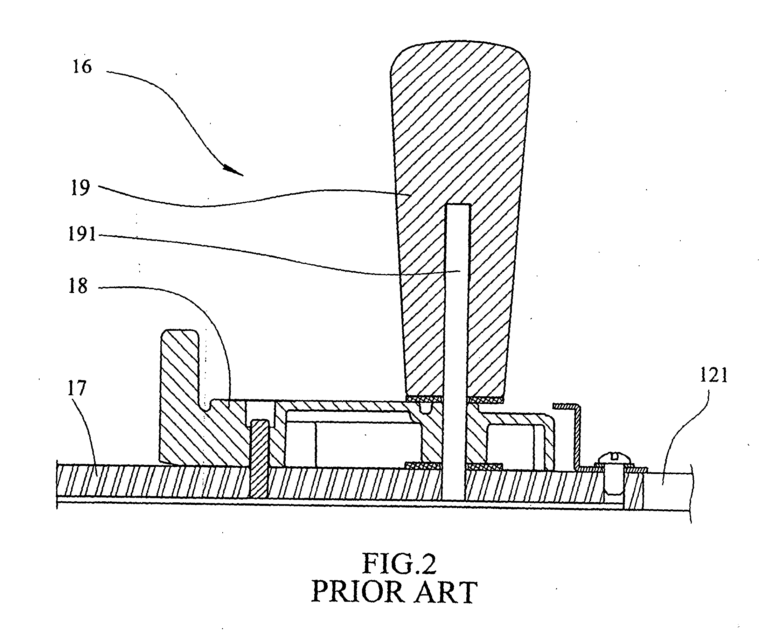

A conventional circular saw machine 10 is shown in Fig. 1 and generally includes a base 11 and a worktable 12 is located on a top of the base 11. A slide 13 is connected to the worktable 12 and a movable top 14 is slidably engaged with the slide 13. A plurality of curve slots 141 are defined in the top 14 and a tilt control device 15 is movably and rotatably engaged with the slots 141. It is noted that the slide 13 includes two ends which protrude from two sides of the worktable 12 and occupy extra space. Besides, the tilt control device 15 is engaged with the curve slots 141 so as to guide the object to be cut at a desired angle. When the tilt control device 15 is disengaged from the curve slots 141 in the movable top 14, it cannot be installed to the straight slot 121 because no proper connection mechanism is provided to be engaged with the straight slot 121. When the object to be cut has to be arranged on the worktable 12, a angle gauge device 16 as shown in Fig. 2 is needed to be engaged with the straight slot 121. The angle gauge device 16 includes a board 17, an angle positioning member 18 and a handle 19. The handle 19 includes a connection rod 191 which extends through the angle positioning member 18 and is threadedly connected to the board 17. By loosening the connection rod 191, the angle positioning member 18 can be rotated so as to se the object at desired angles. However, the angle gauge device 16 cannot be cooperated with the curve slots 141.

The present invention intends to provide a movable top which can be adjusted in transverse direction and the tilt control device can be used both in the curve or straight slots.

The present invention is described in claim 1. Further embodiments of the present invention are described in the dependent claims.

The present invention relates to a worktable which comprises a groove defined in a top thereof and at least two positioning units are located in the groove, and a movable top is movably engaged with the groove by slidably engaging two guide lips on two sides of the movable top with the two openings of the at least two positioning units. A tilt control device includes a board which can be movably engaged with two respective guide slots in the worktable and the movable top. An angle setting member is pivotably connected to the board and includes a curve slot through which a bolt extends. A lower handle and a top handle are connected with each other arid connected to the bolt. The top handle has a threaded protrusion which extends through a through hole of the lower handle, a passage of the bolt and is fixed to the board. The top handle can be loosened to allow the user to move the angle setting member by operating the lower handle.

The present invention will become more obvious from the following description when taken in connection with the accompanying drawings which show, for purposes of illustration only, a preferred embodiment in accordance with the present invention.
Fig. 1 shows a conventional worktable and the tilt control device;
Fig. 2 is a cross sectional view of the conventional tilt control device;
Fig. 3 is a perspective view of the worktable of the present invention;
Fig. 4 is an exploded view to show the worktable of the present invention;
Fig. 5 is a side view to show the movable top and the positioning unit of the present invention;
Fig. 6 shows the movable top is moveable along the groove in the worktable;
Fig. 7 is a perspective view to show the tilt control device of the present invention;
Fig. 8 is an exploded view to show the tilt control device of the present invention;
Fig. 9 is a cross sectional view to show that the tilt control device is engaged with the first guide slot in the worktable of the present invention;
Fig. 10 shows the angle setting member is pivoted an angle, and
Fig. 11 is a cross sectional view to show that the tilt control device is engaged with the second guide slot in the movable top of the present invention.

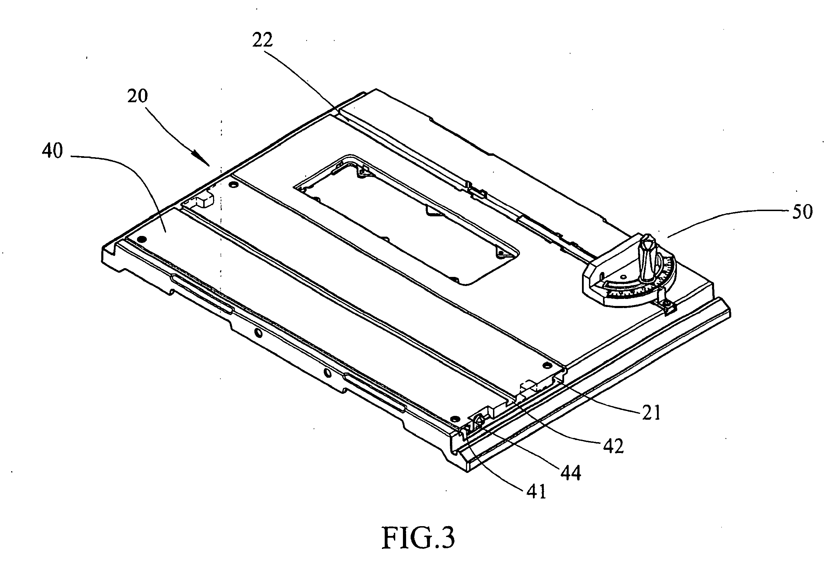

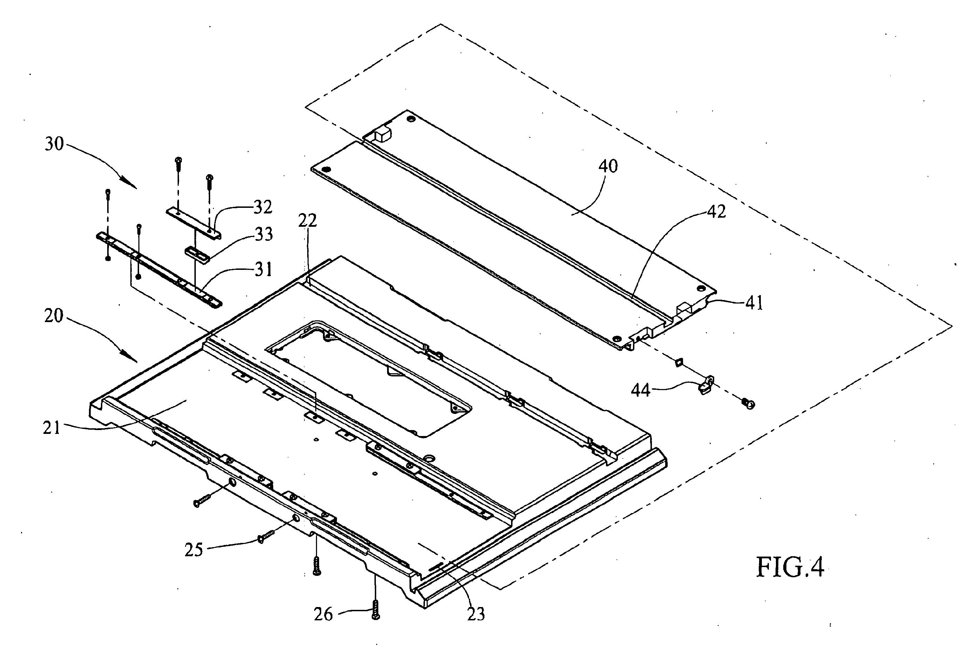

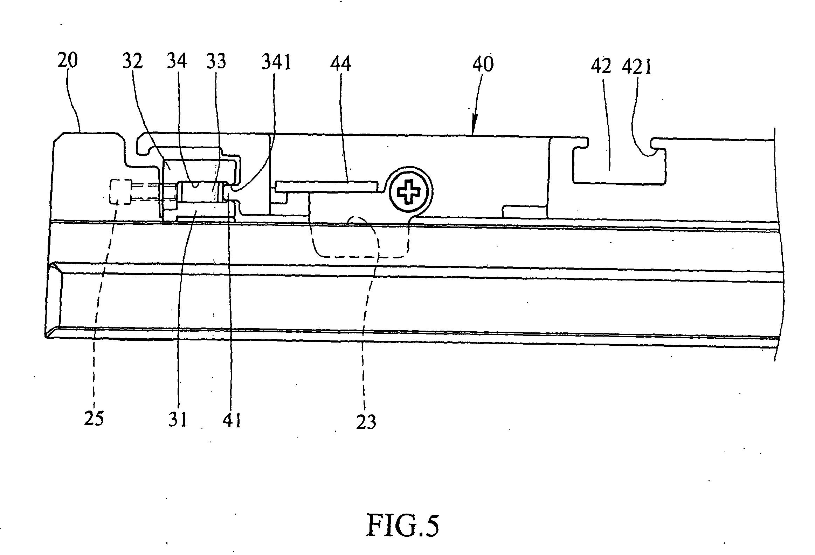

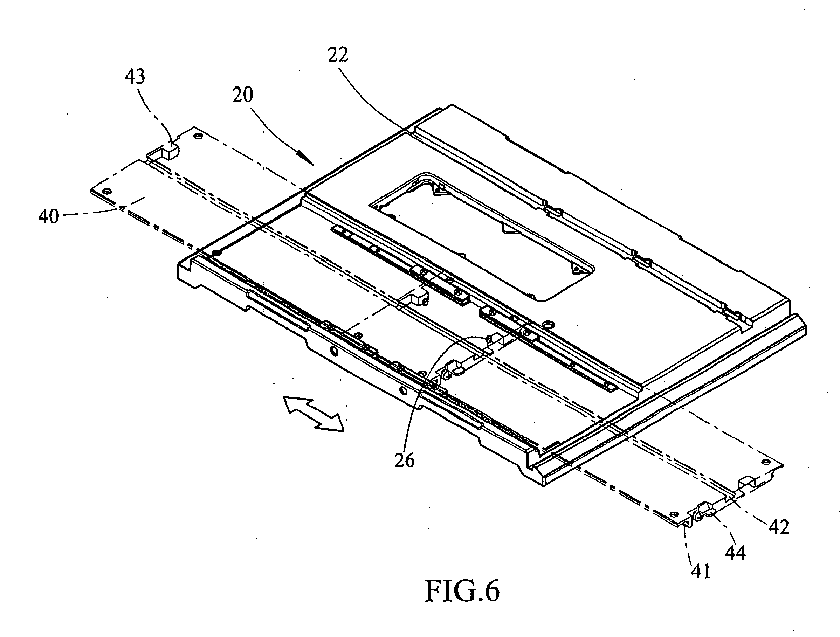

Referring to Figs. 3 to 6, the worktable 20 of the present invention comprises a longitudinal groove 21 defined in a top thereof and at least two positioning units 30 are installed in the groove 21. Each of the at least two positioning units 30 has a bottom piece 31 and a top piece 32 which is connected to the bottom piece 31. The bottom piece 31 is fixed to an inside of the groove 21 of the worktable 20. A space 34 is defined between the bottom piece 31 and the top piece 32, and the space 34 defining an opening 341 in an end of each of the at least two positioning units 30. An adjustment member 33 is received in the space 34 between the bottom piece 31 and the top piece 32 of each of the at least two positioning units 30. Two adjustment bolts 25 (Fig. 5) are connected to the worktable 20 and one end of each adjustment bolt 25 extends into the space 34 and is in contact with the adjustment member 33.

A movable top 40 is movably engaged with the groove 21 and includes two guide lips 41 on two sides thereof. The two guide lips 41 are engaged with the two openings 341 of the at least two positioning units 30 and in contact with the adjustment member 33. A recess 23 is defined in a surface defining the groove 21 and the movable top 40 has an engaging block 44 which is engaged with recess 23 to position the movable top 40. The movable top 40 further includes two positioning members 43 on an underside thereof and two stops 26 protrude from the surface of the groove 21 such that the movable top 40 is stopped when the positioning members 43 are stopped by the stops 26. The movable top 40 can be adjusted in transverse direction by pushing the adjustment member 33 so as to maintain smooth movement in the groove 21.

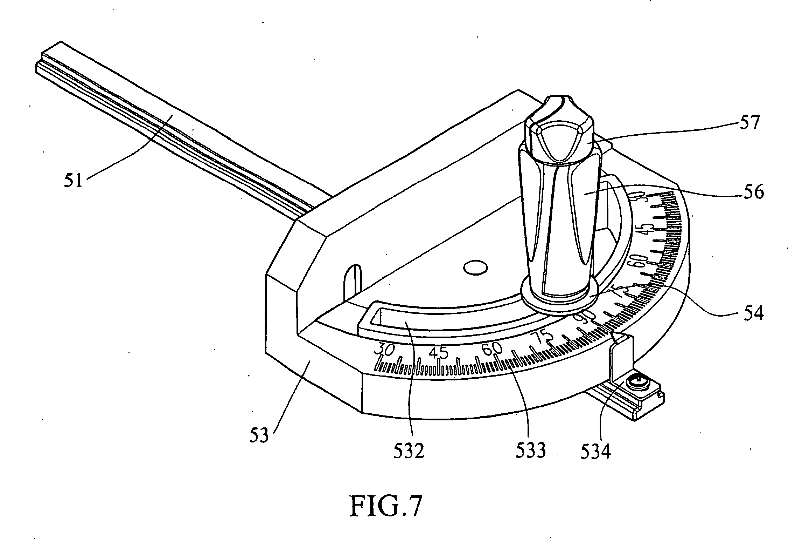

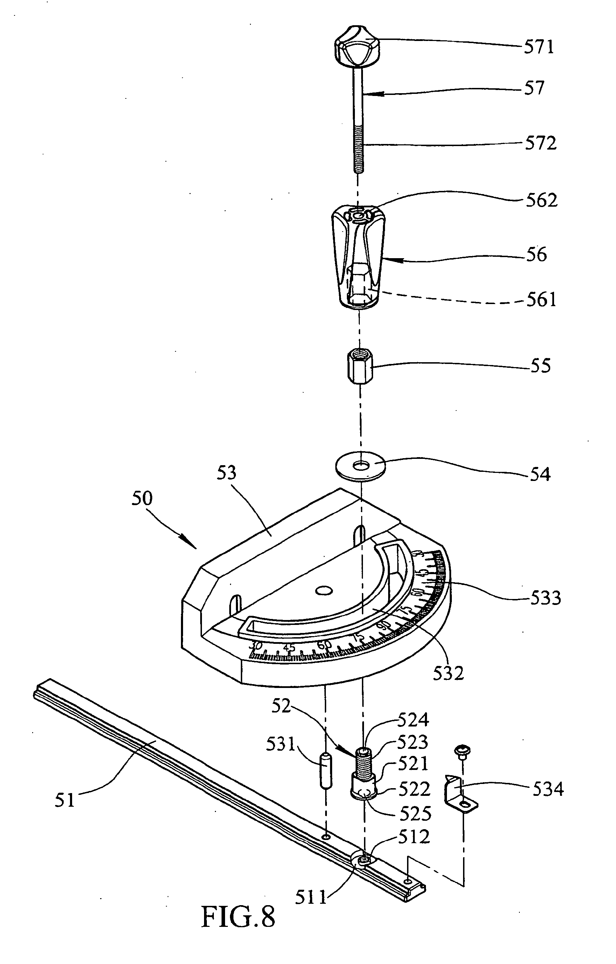

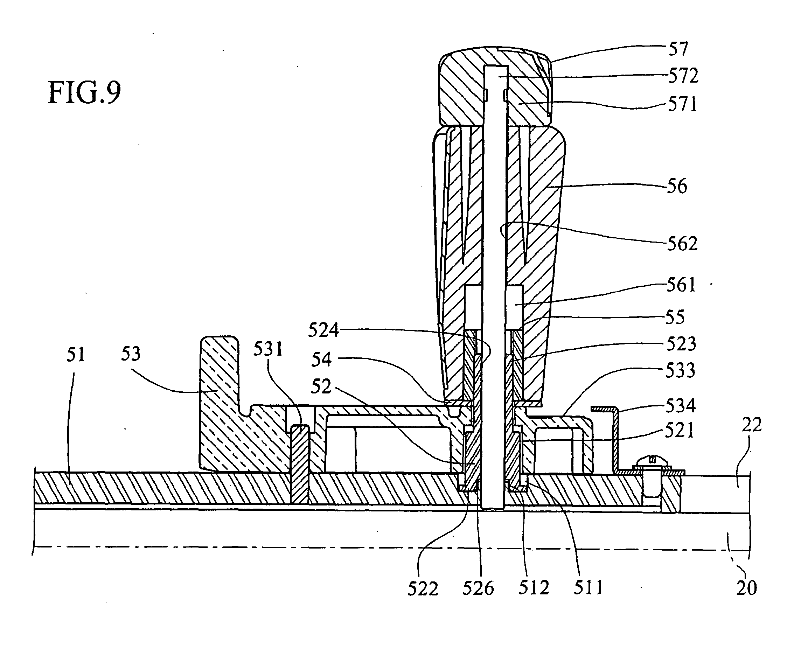

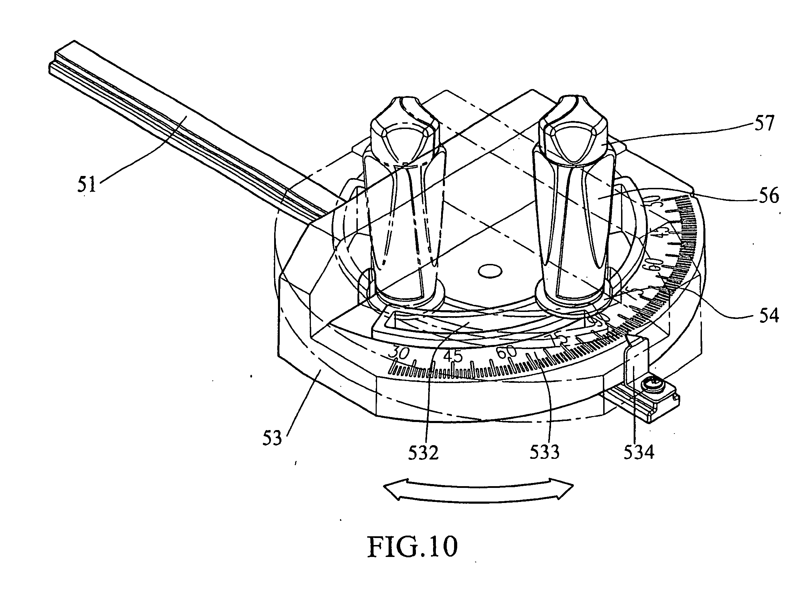

Referring to Figs. 7 to 10, a tilt control device 50 has an elongate board 51 which can be movably engaged with a first guide slot 22 in the worktable 20 or a second guide slot 42 in the movable top 40. A concavity 511 is defined in a top of the board 51 and a positioning rod 512 extends from an inside of the concavity 511 of the board 51. An angle setting member 53 is pivotably mounted to a pin 531 extending from the top of the elongate board 51. The angle setting member 53 has a curve slot 532 and marks 533 are marked along the curve slot 532. An index member 534 s fixed on the board 51 so as to point the marks 533 when the angle setting member 53 is rotated.

A bolt 52 has a flange 522 extending radially from a polygonal head 521 thereof and the head 521 is received in the concavity 511. A threaded rod 523 extends from the head 521 and a passage 524 is defined axially through the threaded rod 523 and the head 521. The threaded rod 523 extends through the curve slot 532 of the angle setting member 53. The head 521 of the bolt 52 is a polygonal head 521 and a recess 525 is defined in a distal surface of the head 521, a diameter of the recess 525 is larger than that of the passage 524, the positioning rod 512 of the board 51 is pivotably engaged with the recess 525.

A lower handle 56 has an axial through hole 562 and a polygonal notch 561 is defined in an underside of the lower handle 56 and communicates with the through hole 562. A locking member 55 having threaded inner periphery is engaged with the polygonal notch 561 so as to form a threaded section in the through hole 562. A top handle 57 includes an operation head 571 which has a threaded protrusion 572 extending from an underside thereof and the threaded protrusion 572 extends through the through hole 562 of the lower handle 56, a washer 54 clamped between an underside of the lower handle 56 and a top of the angle setting member 53, the passage 524 of the bolt 52 and is fixedly connected to the positioning rod 512 extending from the inside of the concavity 511 of the board 51.

When the angle setting member 53 is engaged with the first guide slot 22 of the worktable 20, the top handle 57 can be first loosened so that the threaded protrusion 572 is loosened from the positioning rod 512 on the board 51, in other words, the lower handle 56 is not firmly compressed on the angle setting member 53, so that the angle setting member 53 can be rotated about the pin 531 to a desired angle which can be confirmed by checking the marks 533 by the index member 534. The top handle 57 is then tightened to the positioning rod 512 again to compress the lower handle 56 onto the angle setting member 53. Accordingly, the object to be cut can be arranged at a desired angle.

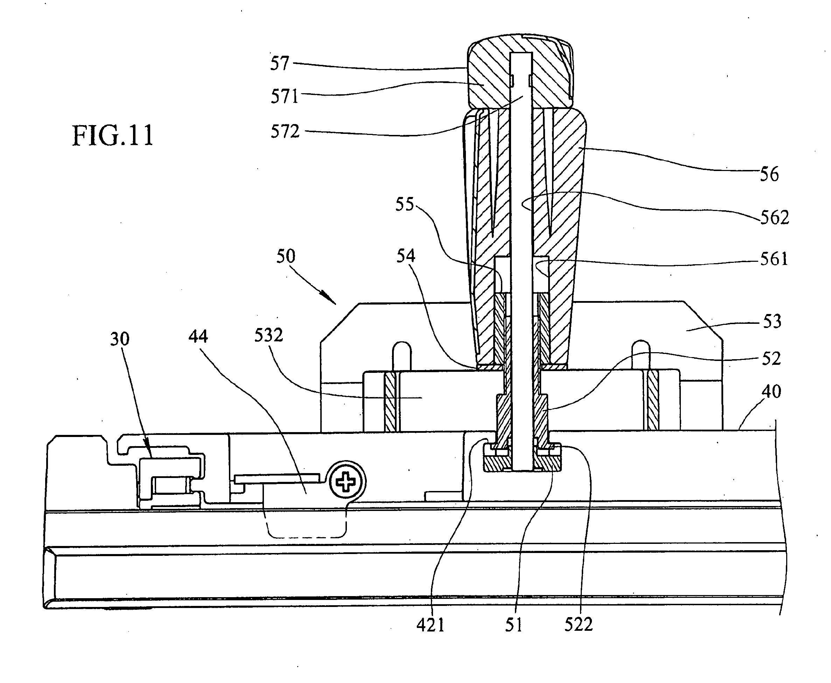

When using angle setting member 53 in the second guide slot 42 in the movable top 40, as shown in Fig. 11, the top handle 57 can be first loosened so that the threaded protrusion 572 is loosened from the positioning rod 512 on the board 51. The lower handle 56 is then loosened, the locking member 55 engaged with the polygonal notch 561 is rotated and the threaded rod 523 of the bolt 52 is moved away from the locking member 55 so that the flange 522 on the head 521 is moved downward till a gap between the head 521 and the angle setting member 53 is large enough to accommodate the contact lips 421 extending inward from two facing insides of the second guide slot 42. The board 51 is then slid into the second guide slot 42 and the lower handle 56 is then tightened. The threaded rod 523 on the bolt 52 is threadedly connected to the locking member 55, the flange 522 is raised and contacts against the underside of the contact lips 421. The angel setting member 53 is then fixed on the movable top 40 by clamping the bolt 52 between the washer 54 and the flange 522. The top handle 57 is then tightened to fixed connect the threaded protrusion 572 and the positioning rod 512. The user may operate the angle setting member 53 by operating the lower handle 56 and the top handle 57.

The tilt control device 50 can be used with the first guide slot 22 or the second guide slot 42 to set a desired angle to the object to be cut. The lower handle 56 may also be used as a handle to move the movable top 40.

While we have shown and described the embodiment in accordance with the present invention, it should be clear to those skilled in the art that further embodiments may be made without departing from the scope of the present invention.

## Claims

1. A worktable (20) comprising:
a groove (21) defined in a top portion of the worktable (20) ;
at least two positioning units (30) each having a bottom piece (31) and a top piece (32), the top piece (32) connected to the bottom piece (31), the bottom piece (31) fixed to the worktable (20), a space (34) defined between the bottom piece (31) and the top piece (32), the space (34) defining an opening (341) in an end of each of the at least two positioning units (30);
a movable top (40) movably engaged with the groove (21) and including two guide lips (41) on two sides thereof, the two guide lips (41) engaged with the two openings (341) of the at least two positioning units (30); and
a tilt control device (50) having a board (51) that is movably engaged with a first guide slot (22) in the worktable or a second guide slot (42) in the movable top (40), an angle setting member (53) having a curve slot (532), the member (53) pivotably connected to the board (51) and a top handle (57) having a threaded protrusion (572) extending from an underside thereof, **characterized in that**
a lower handle (56) has an axial through hole (562) that has a threaded section defined in an inner periphery thereof;
a bolt (52) has a flange (522) extending radially from a head (521) thereof, a threaded rod (523) extending from the head (521) and a passage (524) defined axially through the threaded rod (523) and the head (521); and
a concavity (511) is defined in a top of the board (51),
wherein the head (521) is received in the concavity (511), the threaded rod (523) extends through the curve slot (532), the threaded section is engaged with the threaded rod (523), and the threaded protrusion (572) extends through the through hole (562) of the lower handle (56) and the passage (524) of the bolt (52) and is fixed to the board (51).

2. The worktable (20) as claimed in claim 1, wherein a recess (23) is defined in a surface defining the groove (21) and the movable top (40) has an engaging block (44) that is engaged with the recess (23) to position the movable top (40).

3. The worktable (20) as claimed in claim 1, wherein the movable top (40) includes two positioning members (43) on an underside thereof and two stops (26) protrude from the surface of the groove (21) such that the movable top (40) is stopped when the positioning members (43) are stopped by the stops (26).

4. The worktable (20) as claimed in claim 1, wherein an adjustment member (33) is received in the space (34) between the bottom piece (31) and the top piece (32) of each of the at least two positioning units (30).

5. The worktable (20) as claimed in claim 4, wherein the adjustment member (33) is adjustable via the opening (341).

6. The worktable (20) as claimed in claim 5, wherein the adjustment member (33) is adjustable by the guide lip (41) via the opening (341).

7. The worktable (20) as claimed in claim 1, wherein a washer (54) is mounted to the threaded rod (523) of the bolt (52) so as to be clamped between an underside of the lower handle (56) and a top of the angle setting member (53).

8. The worktable (20) as claimed in claim 1, wherein a positioning rod (512) extends from an inside of the concavity (511) of the board (51).

9. The worktable (20) as claimed in claim 8, wherein the threaded protrusion (572) of the top handle (57) extends through the through hole (562) in the lower handle (56), the washer (54), and the passage (524) of the bolt (52) and is fixedly connected to the positioning rod (512) extending from the inside of the concavity (511) of the board (51).

10. The worktable (20) as claimed in claim 8, wherein the head (521) of the bolt (52) is a polygonal head (521) and a recess (525) is defined in a distal surface of the head (521) , a diameter of the recess (525) is larger than that of the passage (524), the positioning rod (512) of the board is pivotably engaged with the recess (525).

11. The worktable (20) as claimed in claim 1, wherein a polygonal notch (561) is defined in an underside of the lower handle (56) and communicates with the through hole (562), a locking member (55) having threaded inner periphery is engaged with the polygonal notch (561) so as to form the threaded section of the through hole (562).

## Patentansprüche

1. Arbeitstisch (20), aufweisend:
eine Nut (21), die in einem oberen Abschnitt des Arbeitstisches (20) definiert ist,
mindestens zwei Positioniereinheiten (30), von denen jede ein unteres Teil (31) und ein oberes Teil (32) aufweist, wobei das obere Teil (32) an dem unteren Teil (31) angeschlossen ist, das untere Teil (31) an dem Arbeitstisch (20) festgelegt ist, ein Raum (34) zwischen dem unteren Teil (31) und dem oberen Teil (32) definiert ist und der Raum (34) eine Öffnung (341) in einem Ende jeder der mindestens zwei Positioniereinheiten (30) definiert,
einen bewegbaren Aufsatz (40), der in bewegbarem Eingriff mit der Nut (21) ist und zwei Führungslippen (41) an zwei Seiten davon aufweist, wobei die zwei Führungslippen (41) mit den zwei Öffnungen (341) der mindestens zwei Positioniereinheiten (30) in Eingriff sind, und
eine Neigungssteuerungsvorrichtung (50), die eine Tafel (51), die in bewegbarem Eingriff mit einer ersten Führungsnut (22) in dem Arbeitstisch oder mit einer zweiten Führungsnut (42) in dem bewegbaren Aufsatz (40) ist, ein Winkeleinstellelement (53), das ein bogenförmiges Langloch (532) aufweist, wobei das Element (53) an der Tafel (51) drehbar angeschlossen ist, und einen oberen Griff (57) aufweist, der einen Gewindevorsprung (572) aufweist, der von einer Unterseite davon hervorsteht, **dadurch gekennzeichnet, dass**
ein unterer Griff (56) ein Axialdurchgangsloch (562) aufweist, das einen Gewindeabschnitt hat, der an einem Innenumfang davon definiert ist,
ein Bolzen (52) einen Flansch (522), der sich radial von einem Kopf (521) davon erstreckt, einen Gewindestab (523), der sich von dem Kopf (521) erstreckt, und eine Passage (524) aufweist, die axial durch den Gewindestab (523) und den Kopf (521) hindurch definiert ist, und
eine Konkavität (511) in einer Oberseite der Tafel (51) definiert ist, wobei der Kopf (521) in der Konkavität (511) aufgenommen ist, der Gewindestab (523) sich durch das bogenförmige Langloch (532) hindurch erstreckt, der Gewindeabschnitt mit dem Gewindestab (523) in Eingriff ist, und der Gewindevorsprung (572) sich durch das Durchgangsloch (562) des unteren Griffes (56) und die Passage (524) des Bolzens (52) erstreckt und an der Tafel (51) festgelegt ist.

2. Arbeitstisch (20) gemäß Anspruch 1, wobei eine Aussparung (23) in einer Fläche definiert ist, von der die Nut (21) definiert ist, und der bewegbare Aufsatz (40) eine Eingriffverriegelung (44) aufweist, die mit der Aussparung (23) zum Positionieren des bewegbaren Aufsatzes (40) in Eingriff ist.

3. Arbeitstisch (20) gemäß Anspruch 1, wobei der bewegbare Aufsatz (40) zwei Positionierelemente (43) an einer Unterseite davon aufweist, und zwei Anschläge (26) von der Fläche der Nut (21) derart hervorstehen, dass der bewegbare Aufsatz (40) gestoppt wird, wenn die Positionierelemente (43) von den Anschlägen (26) gestoppt werden.

4. Arbeitstisch (20) gemäß Anspruch 1, wobei ein Justierelement (33) in dem Raum (34) zwischen dem unteren Teil (31) und dem oberen Teil (32) jeder der mindestens zwei Positioniereinheiten (30) aufgenommen ist.

5. Arbeitstisch (20) gemäß Anspruch 4, wobei das Justierelement (33) via die Öffnung (341) justierbar ist.

6. Arbeitstisch (20) gemäß Anspruch 5, wobei das Justierelement (33) von der Führungslippe (41) via die Öffnung (341) justierbar ist.

7. Arbeitstisch (20) gemäß Anspruch 1, wobei eine Beilagscheibe (54) an den Gewindestab (523) des Bolzens (52) montiert ist, so dass sie zwischen einer Unterseite des unteren Griffs (56) und einer Oberseite des Winkeleinstellelements (53) eingeklemmt ist.

8. Arbeitstisch (20) gemäß Anspruch 1, wobei ein Positionierstab (512) von einer Innenseite der Konkavität (511) der Tafel (51) hervorsteht.

9. Arbeitstisch (20) gemäß Anspruch 8, wobei der Gewindevorsprung (572) des oberen Griffes (57) sich durch das Durchgangsloch (562) in dem unteren Griff (56), die Beilagscheibe (54) und die Passage (524) des Bolzens (52) hindurch erstreckt und fest an dem Positionierstab (512) angeschlossen ist, der von der Innenseite der Konkavität (511) der Tafel (51) hervorsteht.

10. Arbeitstisch (20) gemäß Anspruch 8, wobei der Kopf (521) des Bolzens (52) ein polygonaler Kopf (521) ist, und eine Aussparung (525) in einer distalen Fläche des Kopfes (521) definiert ist, wobei ein Durchmesser der Aussparung (525) größer als derjenige der Passage (524) ist, wobei der Positionierstab (512) der Tafel in drehbarem Eingriff mit der Aussparung (525) ist.

11. Arbeitstisch (20) gemäß Anspruch 1, wobei eine polygonale Aussparung (561) in einer Unterseite des unteren Griffes (56) definiert ist und mit dem Durchgangsloch (562) in Verbindung steht, und ein Verschlusselement (55), das einen Innenumfang mit Gewinde aufweist, mit der polygonalen Aussparung (561) in Eingriff ist, so dass der Gewindeabschnitt des Durchgangslochs (562) ausgebildet ist.

## Revendications

1. Etabli (20), comprenant :
une rainure (21) définie dans une partie supérieure de l'établi (20) ;
au moins deux unités de positionnement (30), chacune ayant une pièce inférieure (31) et une pièce supérieure (32), la pièce supérieure (32) étant raccordée à la pièce inférieure (31), la pièce inférieure (31) étant fixée à l'établi (20), un espace (34) défini entre la pièce inférieure (31) et la pièce supérieure (32), l'espace (34) définissant une ouverture (341) à une extrémité de chacune des au moins deux unités de positionnement (30) ;
un dessus mobile (40) engagé de manière à pouvoir se déplacer dans la rainure (21) et comprenant deux lèvres de guidage (41) sur ses deux côtés, les deux lèvres de guidage (41) étant engagées dans les deux ouvertures (341) des au moins deux unités de positionnement (30) ; et
un dispositif de commande d'inclinaison (50) ayant une planche (51) qui est engagée de manière à pouvoir se déplacer dans une première fente de guidage (22) ménagée dans l'établi ou dans une seconde fente de guidage (42) ménagée dans le dessus mobile (40), un élément de réglage d'angle (53) ayant une fente incurvée (532), l'élément (53) étant raccordé à pivotement à la planche (51) et une manette supérieure (57) ayant une saillie filetée (572) s'étendant d'une face inférieure de celui-ci, **caractérisé en ce que**
une manette inférieure (56) a un trou axial traversant (562) qui présente une section taraudée définie sur sa périphérie interne ;
un boulon (52) a une bride (522) s'étendant radialement de sa tête (521), une tige filetée (523) s'étendant de la tête (521) et un passage (524) défini axialement à travers la tige filetée (523) et la tête (521) ; et
une concavité (511) est définie sur le haut de la planche (51), dans laquelle la tête (521) est reçue dans la concavité (511), la tige filetée (523) s'étend à travers la fente incurvée (532), la section filetée est engagée sur la tige filetée (523) et la saillie filetée (572) s'étend à travers le trou traversant (562) de la manette inférieure (56) et le passage (524) du boulon (52) et est fixée à la planche (51).

2. Etabli (20) selon la revendication 1, dans lequel un évidement (23) est défini dans une surface définissant la rainure (21) et la face supérieure mobile (40) présente un bloc d'engagement (44) qui est engagé sur l'évidement (23) pour positionner la face supérieure mobile (40).

3. Etabli (20) selon la revendication 1, dans lequel la face supérieure mobile (40) comprend deux éléments de positionnement (43) sur sa face inférieure et deux cales (26) font saillie de la surface de la rainure (21) de sorte que la face supérieure mobile (40) soit arrêtée lorsque les éléments de positionnement (43) sont arrêtés par les cales (26).

4. Etabli (20) selon la revendication 1, dans lequel un élément d'ajustement (33) est reçu dans l'espace (34) situé entre la pièce inférieure (31) et la pièce supérieure (32) de chacune des au moins deux unités de positionnement (30).

5. Etabli (20) selon la revendication 4, dans lequel l'élément d'ajustement (33) peut être ajusté par le biais de l'ouverture (341).

6. Etabli (20) selon la revendication 5, dans lequel l'élément d'ajustement (33) peut être ajusté par la lèvre de guidage (41) via couverture (341).

7. Etabli (20) selon la revendication 1, dans lequel une rondelle (54) est montée sur la tige filetée (523) du boulon (52) de manière à être serrée entre une face inférieure de la manette inférieure (56) et une face supérieure de l'élément de réglage d'angle (53).

8. Etabli (20) selon la revendication 1, dans lequel une tige de positionnement (512) s'étend de l'intérieur de la concavité (511) de la planche (51).

9. Etabli (20) selon la revendication 8, dans lequel la saillie filetée (572) de la manette supérieure (57) s'étend à travers le trou traversant (562) dans la manette inférieure (56), la rondelle (54) et le passage (524) du boulon (52) et est raccordée fixement à la tige de positionnement (512) s'étendant de l'intérieur de la concavité (511) de la planche (51).

10. Etabli (20) selon la revendication 8, dans lequel la tête (521) du boulon (52) est une tête polygonale (521) et un évidement (525) est défini dans une surface distale de la tête (521), un diamètre de l'évidement (525) est supérieur à celui du passage (524) et la tige de positionnement (512) de la planche est engagée à pivotement dans l'évidement (525).

11. Etabli (20) selon la revendication 1, dans lequel une entaille polygonale (561) est définie sur une face inférieure de la manette inférieure (56) et est en communication avec le trou traversant (562), un élément de verrouillage (55) ayant une périphérie interne taraudée est engagé sur l'encoche polygonale (561) de manière à former la section taraudée du trou traversant (562).
